Europäisches Patentamt

(19) European Patent Office

Office européen des brevets

(11) Numéro de publication: **0 176 445**
**B1**

(12) **FASCICULE DE BREVET EUROPÉEN**

(45) Date de publication du fascicule du brevet:
18.05.88

(21) Numéro de dépôt: **85401855.3**

(22) Date de dépôt: **24.09.85**

(51) Int. Cl.⁴: **F 16 H 11/06,** F 16 H 47/06

(54) Dispositif de pilotage d'une transmission continue.

(30) Priorité: **25.09.84 FR 8414689**

(43) Date de publication de la demande:
**02.04.86 Bulletin 86/14**

(45) Mention de la délivrance du brevet:
**18.05.88 Bulletin 88/20**

(84) Etats contractants désignés:
**BE DE GB IT SE**

(56) Documents cité:
**EP-A-0 063 787**
**EP-A-0 073 475**
**EP-A-0 139 578**
**FR-A-743 184**
**FR-A-2 232 933**
**GB-A-2 131 504**

(73) Titulaire: **REGIE NATIONALE DES USINES RENAULT, Boîte postale 103 8-10 avenue Emile Zola, F-92109 Boulogne- Billancourt (FR)**

(72) Inventeur: **Baudoin, Patrice, 3, Allée des Carrougeaux, F-78620 L'Etang La Ville (FR)**

(74) Mandataire: **Chassagnon, Jean- Alain, REGIE NATIONALE DES USINES RENAULT (S.0804), F-92109 Boulogne- Billancourt Cedex (FR)**

EP 0 176 445 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention se rapporte à un dispositif de pilotage d'une transmission continue, associé à un moteur thermique et à un convertisseur inverseur, susceptible d'assurer un fonctionnement optimalisé selon un critère prédéterminé, tel que par exemple une consommation d'énergie minimale.

Selon l'invention le dispositif de pilotage se rapporte à une transmission continue associée à un moteur thermique et à un convertisseur inverseur dont l'arbre de turbine est, soit solidarisé avec l'arbre du réacteur pour obtenir la marche avant, soit solidarisé avec le carter pour obtenir la marche arrière, comme connu par EP-A-0 139 578 publié le 2.5.85. Le dispositif de pilotage, selon l'invention, génère une consigne de vitesse d'entrée du variateur pour le marche arrière, qui est différente de la consigne de vitesse d'entrée du variateur pour la marche avant; de façon à obtenir, pendant le temps de glissement du convertisseur en marche arrière, un rapport de transmission du variateur qui soit plus long que celui de la marche avant.

Selon un mode de réalisation de l'invention, le dispositif est agencé de manière à ce que la consigne de vitesse est une fonction de la position des moyens d'alimentation du moteur, qu'on peut calculer à partir des caractéristiques habituelles du moteur, du convertisseur et du variateur de façon à obtenir les performances maximales.

Selon un mode de réalisation de l'invention, le dispositif de pilotage s'applique à un variateur à courroie ou à chaîne, dont les poulies sont munies de vérins hydrauliques, ledit dispositif de pilotage ayant à générer deux pressions s'exerçant respectivement sur les poulies primaire et secondaire dudit variateur.

Selon un mode de réalisation de l'invention, le dispositif de pilotage comporte une unité logique associée à deux électro-vannes de modulation des pressions; l'unité logique recevant l'information position du levier de sélection, l'information sur la position des moyens d'alimentation du moteur thermique, et l'information sur la vitesse d'entrée du variateur; de façon à générer des signaux électriques sur les électro-vannes pour obtenir les pressions voulues, qui varient selon des lois connues par ailleurs.

Selon un mode de réalisation de l'invention le dispositif de pilotage comporte une première vanne, qui régule la pression du vérin de la première poulie, et une deuxième vanne qui régule la pression du vérin de la deuxième poulie; l'information position du levier de sélection étant communiqué à la première vanne, au moyen de deux cames différentes selon que le levier de sélection est en avant ou en arrière.

Selon un mode de réalisation de l'invention une vanne régule la pression du vérin de la poulie primaire, qui est soumise à des forces antagonistes liées d'une part à la vitesse d'entrée du variateur et d'autre part à la position des moyens d'alimentation du moteur. Cette vanne se trouve soumise à une troisième force en marche arrière, ladite force étant obtenue en faisant agir la pression d'alimentation du frein sur un épaulement adéquat.

L'invention sera mieux comprise à l'étude de la description détaillée, qui va suivre faite en référence aux dessins annexés sur lesquels:
- la figure 1 représente le schéma d'une transmission avec convertisseur;
- la figure 2 représente les courbes de variation du couple aux roues maximal en fonction de la vitesse du véhicule;
- la figure 3 représente la courbe de variation du couple moteur maximal en fonction de la vitesse moteur;
- la figure 4 représente les courbes de variation de la puissance du moteur en fonction de la vitesse moteur, et de la position des moyens d'alimentation;
- la figure 5 représente la courbe de variation d'une consigne de vitease à l'entrée du variateur en fonction de la position des moyens d'alimentation;

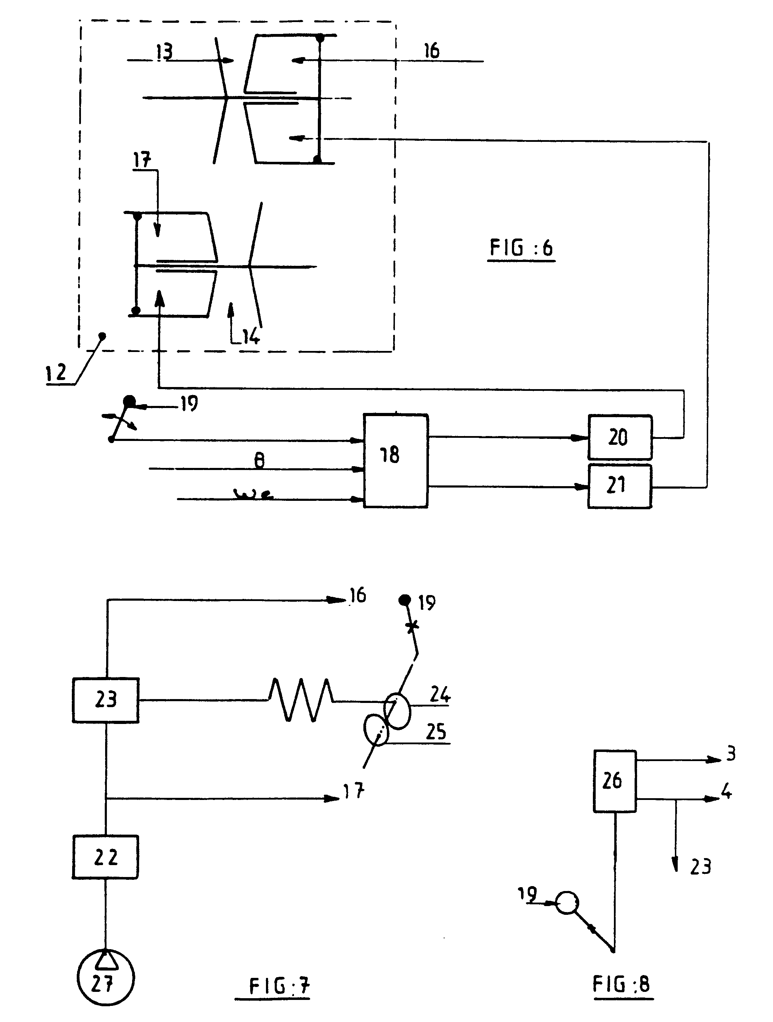

- la figure 6 représente le schéma d'une transmission avec convertisseur inverseur selon l'invention;
- la figure 7 représente le schéma d'une transmission selon un deuxième mode de réalisation de l'invention;
- la figure 8 représente le schéma d'une transmission selon un troisième mode de réalisation de l'invention.

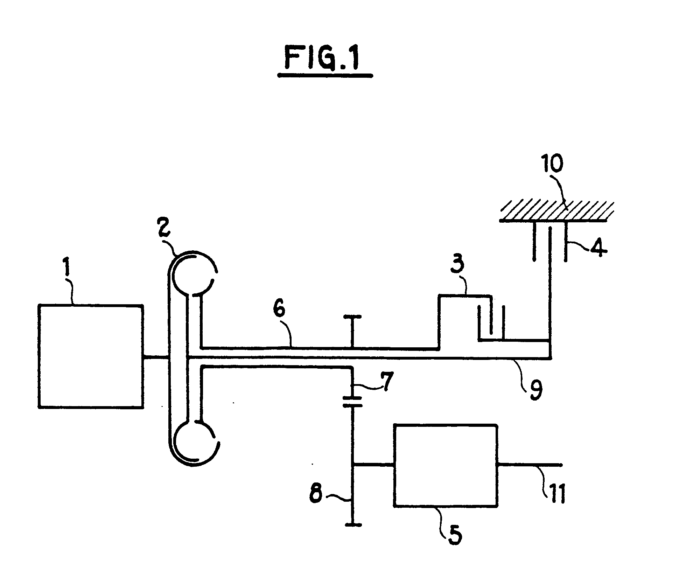

Considérons le groupe moto-propulseur dont le schéma est représenté sur la figure 1. Ce groupe moto-propulseur comprend:
- un moteur thermique 1,
- un convertisseur de couple hydrodynamique à trois éléments 2,
- un embrayage 3,
- un frein 4,
- une boîte de vitesse 5 entraînée par l'arbre du réacteur 6 par l'intermédiaire des pignons 7 et 8.

L'embrayage 3 permet de solidariser l'arbre de turbine 9 avec l'arbre du réacteur 6. Le convertisseur fonctionne alors en coupleur.

Le frein 4 permet d'immobiliser l'arbre de turbine 9 par rapport au carter fixe 10. Le convertisseur fonctionne alors véritablement en convertisseur, c'est-à-dire avec un facteur de conversion différent de 1, mais dans ce cas le convertisseur entraîne l'arbre 6 en sens opposé.

Un tel dispositif, qui est connu, permet donc la mise en rotation d'une inertie, ou le démarrage d'un véhicule, qui serait relié à l'arbre 11 de sortie de la boîte de vitesses 5 par un système adéquat, et ceci aussi bien en marche avant qu'en marche arrière.

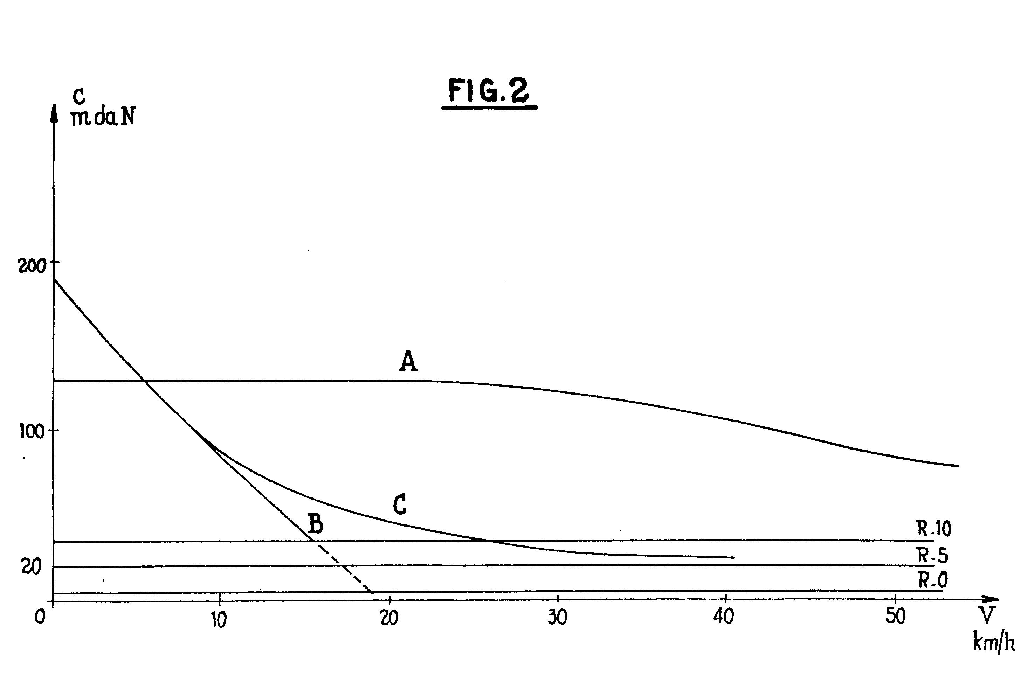

La figure 2 montre le couple aux roues maximal C, que le dispositif de la figure 1 permet d'obtenir sur un véhicule, en fonction de sa vitesse V, la boîte de vitesse étant sur son rapport de première. Le véhicule a les caractéristiques ci-après:

2

- rapport de première: 7,5 Km/h pour une vitesse de 1000 tours/min. de l'arbre 6,
- longueur développée des pneumatiques égale 1,76 m,
- diamètre du convertisseur égale à 227 mm.

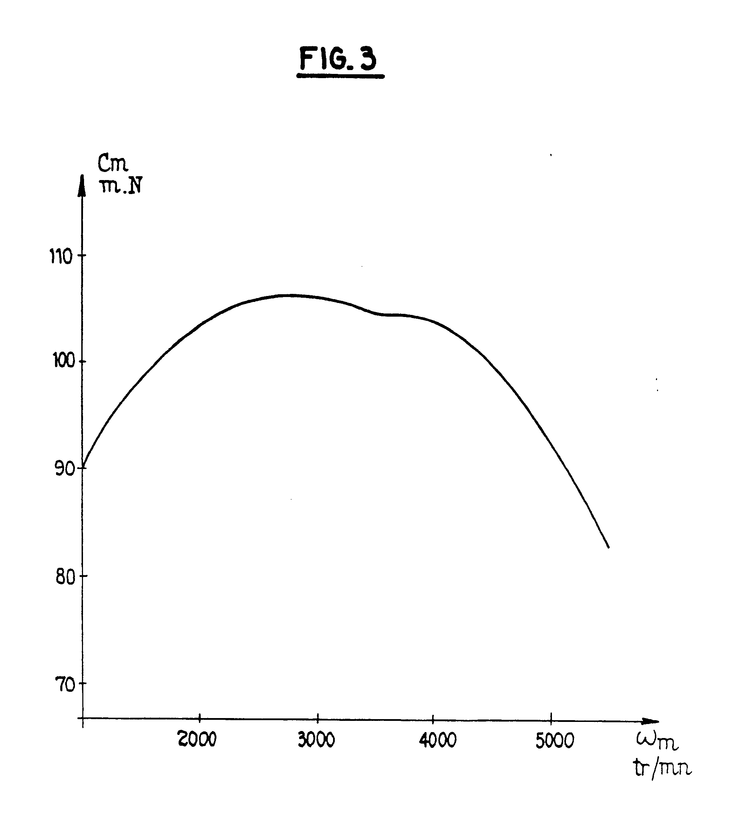

La courbe de variation du couple moteur $C_m$ maximal en fonction de la vitesse du moteur thermique $\omega_m$ est donnée par la figure 3.

Le convertisseur est conçu pour donner une vitesse de calage de 2300 t/min.

Sur la figure 2, la courbe A montre le couple maximal disponible aux roues en marche avant. La courbe B montre le couple maximal disponible aux roues en marche arrière. La courbe $R_0$ montre le couple nécessaire aux roues pour un véhicule ayant un poids de 1100 kg, dans une pente nulle. Ce véhicule a une résistance aux roulements de 120 N/t, et un S. Cx de 0,592 m². Les courbes $R_5$ et $R_{10}$ sont relatives à des pentes de 5 et 10 %.

On voit sur la figure 2, que les aptitudes du véhicule en marche arrière sont limitées:
- à une vitesse limite sur sol plat de 18,7 km/h,
- à une vitesse limite dans une pente de 5 % de 17 km/h,
- à une vitesse limite dans une pente à 10 % de 15,6 km/h.

Nous nous intéresserons maintenant au cas où la boîte de vitesee 5 est remplacée par une transmission continue, par exemple par un variateur 12 dont la poulle motrice 13 serait portée par l'arbre 6. Nous supposerons aussi que le convertisseur 2 est doté d'un embrayage de pontage 15, qui permet d'annuler le glissement dudit convertisseur 2, lorsque celui-ci devient inutile, et ainsi de réduire la consommation du véhicule. De telles associations de moteur thermique avec convertisseur inverseur pontable et variateur sont connues.

Dans tous les cas de mise en oeuvre d'une transmission continue, un dispositif généralement automatique règle en permanence son rapport de transmission, ou mieux, sa vitesse d'entrée $\omega_e$. En effet, à partir de la demande de puissance du conducteur, exprimée par le déplacement d'une commande, par exemple une pédale d'accélérateur, on peut calculer, quelque soit le critère d'optimisation du fonctionnement du moteur:
- une meilleure vitesse de fonctionnement,
- et une certaine position de ses moyens d'alimentation.

Cette position est donc en principe à établir par un dispositif adéquat et cette meilleure vitesse est à obtenir par la transmission continue, dont elle constitue une consigne de vitesse d'entrée, tout au moins en fonctionnement ponté, puisqu'alors la vitesse du moteur et la vitesse d'entrée de la transmission continue sont égales.

On établit facilement que même lorsque les moyens d'alimentation du moteur sont commandés directement par le conducteur, il faut piloter la transmission continue de façon que sa vitesse d'entrée soit égale à une consigne fonction de la position des moyens d'alimentation du moteur.

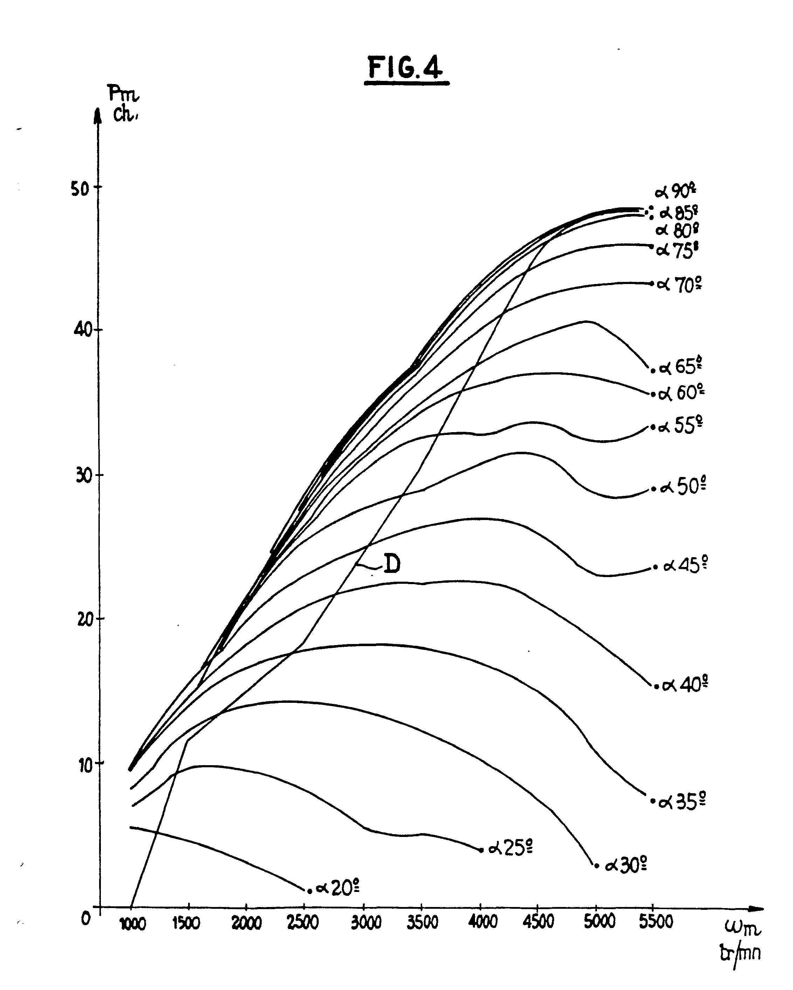

La figure 4 illustre ces propos; elle montre des courbes de variation de la puissance du moteur $P_m$ en fonction de la vitesse moteur $\omega_m$, et ceci pour différentes positions $\theta$ de ses moyens d'alimentation qui dans le cas de la figure est l'ouverture du papillon du carburateur $\alpha$. Cette figure 4 montre également une ligne D de meilleur fonctionnement pour un critère qui est par exemple de moindre consommation. Il apparait que pour toute valeur de $\theta$, c'est-à-dire pour toute valeur de $\alpha$, il existe une vitesse $\omega_m$, qui place le point de fonctionnement du moteur sur la ligne de meilleur fonctionnement. Cette vitesse est la consigne de vitesse moteur, ou de vitesse d'entrée de la transmission continue, quand le convertisseur est ponté.

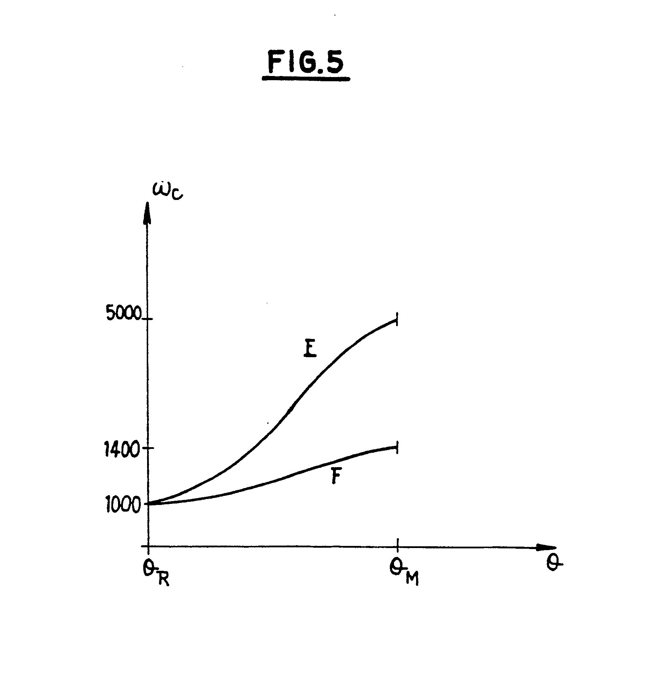

La courbe E de la figure 5, indique l'allure classique d'une telle correspondance entre la valeur d'une vitesse de consigne $\omega_c$, et la valeur de la position des moyens d'alimentation $\theta$, ceci tout du moins dans le cas de critère d'optimisation qui sont la consommation, le bruit ou même les émissions. On a ainsi:
- pour $\theta = \theta_{ralenti}$, $\omega_c = 1000$ tr/mn.,
- et pour $\theta = \theta_{maximum}$, $\omega_c = 5000$ tr/mn.,

Ces valeurs sont relatives à des motorisations classiques.

Revenons maintenant au groupe moto-propulseur constitué par un moteur thermique, un convertisseur inverseur pontable, et une transmission continue. Considérons pour ce groupe moto-propulseur, un démarrage en marche avant, avec $\theta = \theta_{maximum}$. On aura donc comme consigne $\omega_c = 5000$ tr/mn. Or durant toute la phase de couplage, pour des dimensionnements classiques des aubages du convertisseur, le régime moteur et le régime d'entrée de la transmission continue resteront inférieur à 2500 tr/mn. environ. Durant toute cette phase, le dispositif de commande du variateur tendra naturellement à maintenir le variateur sur son rapport le plus court qui correspond au rapport de première d'une boîte de vitesse manuelle.

Il en sera de même pour un démarrage en marche arrière. La vitesse d'entrée de la transmission continue ne pouvant atteindre la vitesse de consigne, elle restera en première, et les performances conférées au véhicule seront les mêmes que celles calculées précédemments, dans le cas d'une boîte de vitesse ayant une démultiplication de première identique à celle du rapport le plus court de la transmission continue.

Ainsi, il apparait qu'il n'est pas nécessaire d'avoir une stratégie de pilotage de la transmission continue en phase de démarrage, qui soit différente de la stratégie définie pour le fonctionnement ponté normal. Or on a pu établir, que si durant la phase de conversion en marche arrière, la stratégie de pilotage de la transmission continue devient celle qui est définie plus loin, on améliore la caractéristique du couple aux roues en fonction de la vitesse du véhicule. Cette stratégie paradoxale a pour effet de faire évoluer le rapport de la transmission continue vers des

rapports longs. Ainsi, le couple aux roues augmente quand on accroît le rapport de la transmission continue, alors que le couple aux roues est en principe inversement proportionnel au rapport de transmission.

La courbe C de la figure 2 montre l'amélioration correspondante.

Sur la figure 2 on a:

- la courbe B correspond à une transmission sur son rapport le plus court suivant l'état de la technique,

- la courbe C correspond à une transmission dérivant vers des rapports plus longs.

Cette stratégie consiste encore à avoir une consigne de vitesse d'entrée pour le variateur qui soit différente de celle qui est utilisée jusqu'ici. Cette consigne de vitesse d'entrée reste néanmoins fonction de la position des moyens d'alimentation du moteur thermique, et définie à partir des courbes moteur et des courbes caractéristiques du convertisseur.

L'invention correspond au pilotage d'une transmission continue associée à un moteur thermique et à un convertisseur inverseur qui donne une consigne de vitesse d'entrée du variateur en marche arrière différente de la consigne de vitesse d'entrée du variateur en marche avant; alors que dans l'état de la technique la consigne de vitesse d'entrée du variateur est la même en marche avant et en marche arrière.

Ces deux consignes de vitesses d'entrée du variateur pour la marche avant et la marche arrière sont des fonctions de la position des moyens d'alimentation du moteur, ou de la position de l'organe de commande de puissance à la disposition du conducteur, qu'on peut afiner en prenant en compte la température du moteur la pression atmosphérique etc...

La consigne de marche arrière, dont l'allure est donnée par la courbe F de la figure 5 provoque une évolution du rapport de la transmission continue à partir de son rapport le plus court, durant la phase de convention, lors d'un démarrage en marche arrière. Pour des motorisations classiques, cette courbe F passe au voisinage des points suivants:

- $\theta = \theta_{ralenti}$, $\omega_c$ 1000 tr/mn.,
- et $\theta = \theta_{maximum}$, $\omega_c$, 1500 tr/mn..

On peut ainsi comparer la courbe F avec la courbe E qui représente l' évolution de la vitesse de consigne $\omega_c$ pour l'état de la technique.

Nous allons décrire maintenant à titre d'illustration trois modes de réalisation de l'invention s'appliquant au cas d'un variateur 12 à courroies ou à chaines, dont les poulies 13 et 14 sont munies respectivement de vérins hydrauliques 16 et 17. Le système ce pilotage selon l'invention a alors à générer deux pressions s'exerçant respectivement sur les flasques coulissants des poulies 13 et 14.

Selon un premier mode de réalisation de l'invention, une unité logique 18 reçoit des informations:

- sur la position du levier de sélection 19 (neutre, avant, arrière),

- position de l'accélérateur ou des moyene d'alimentation du moteur thermique,
- vitesse d'entrée du variateur $\omega_e$.

Cette unité logique 18 génère des signaux électriques pour les deux électrovannes 20 et 21. Ces deux électrovannes 20 et 21 assurent la modulation des pressions $P_i$ et $P_j$ subsiste selon les lois suivantes:

- $P_i = f (\theta, \omega_m, \rho)$ sur l'une des deux poulies du variateur,
- $P_j = g (\theta, \omega_m, \rho) + PID (\omega_e - \omega_c)$ sur l'autre poulie du variateur.

$\rho$ est le rapport de transmission du variateur, et PID est la correction proportionnelle intégrale dérivée.

Ainsi, on évitera par la pression $P_i$ le glissement ou la surcharge excessive du variateur 12, et l'écart entre la vitesse d'entrée $\omega_e$ du variateur et la vitesse de consigne $\omega_c$ tant à s'annuler par la pression $P_j$.

La correction proportionnelle intégrale dérivée PID est déterminée par la relation:

- $PID (\omega_e - \omega_c), = \alpha (\omega_e - \omega_c). \beta \int (\omega_e - \omega_c) dt + \gamma. d/dt (\omega_e - \omega_c)$

Dans cette relation $\alpha$, $\beta$ et $\gamma$ sont des coefficients réglés par le constructeur pour donner à la régulation la stabilté la précision et la rapidité voulues. En marche avant, $\omega_c$ est une fonction $f_1 (\theta)$, et en marche arrière $\omega_c$ est une fonction $f_2 (\theta)$.

Dans un deuxième mode de réalisation de l'invention, une pompe à huile 27 génère une pression de ligne qui est limitée par une première vanne 22 plus ou moins perfectionnée, et qui alimente directement le vérin 17 de la poulie réceptrice 14 du variateur 12, afin qu'il n'y ait ni glissement prolongé ni surcharge exagérée. Il faut noter que dans certaines réalisations particulièrement simples, le serrage est pratiquement indépendant du couple à transmettre, alors qu'il devrait théoriquement lui être proportionnel, ce qui signifie qu'il est souvent très surabondant. Cette pression de ligne est envoyée sur une deuxième vanne 23 qui alimente le vérin 17 de la poulie motrice 13 de façon à annuler l'écart entre la vitesse d'entrée réelle du variateur, et une vitesse de consigne $\omega_c$. La vanne 23 est soumise à deux forces antagonistes, l'une fonction de la vitesse réelle créée par la pression fournie par un tube de Pitot situé sur l'arbre d'entrée du variateur 12; l'autre force est fonction de la position $\theta$ des moyens d'alimentations du moteur par un système mécanique du type came-ressort.

La vitesse d'entrée de consigne $\omega_c$ est donc ici une fonction immuable de ladite position. Pour réaliser l'invention, il suffira par exemple de relier le levier de sélection 19 qui est à la disposition du conducteur, et qui à les positions arrière-neutre-avant, à deux cames différentes 24 et 25. L'une de ces cames s'effaçant au profit de l'autre lorsque le levier de sélection 19 est déplacé de la position arrière à la position avant.

Selon un troisième mode de réalisation de l'invention on mettra à profit l'existence d'une vanne hydraulique 26 commandée manuellement pour l'alimentation des vérins de l'embrayage 3 et du frein 4 associé au convertisseur inverseur 2. Sur la canalisation d'alimentation du vérin du frein 4, par exemple, une dérivation amènera la pression sur un épaulement, à calculer, du tiroir de la deuxième vanne 23 citée plus haut, de manière à perturber l'équilibre établi précédemment. Ainsi la vanne 26 qui régule la pression du vérin 16 de la poulie primaire 13, et qui est soumise à des forces antagonistes liées d'une part à la vitesse d'entrée du variateur et d'autre part à la position des moyens d'alimentation du moteur, se trouve soumise à une troisième force en marche arrières, cette force étant obtenue en faisant agir la pression d'alimentation du frein 4 sur un épaulement adéquat.

## Revendications

1. Dispositif de pilotage d'une transmission continue associée à un moteur thermique (1) et à un convertisseur inverseur (2) dont l'arbre de turbine (9) est, soit solidarisé avec l'arbre du réacteur (6) pour obtenir la marche avant, soit solidarisé avec le carter (10) pour obtenir la marche arrière, où ledit dispositif de pilotage génère une consigne de vitesse $\omega_c$ d'entrée du variateur (12) pour la marche arrière, qui est différente de la consigne de vitesse d'entrée du variateur pour la marche avant; de façon à obtenir, pendant le temps de glissement du convertisseur (2) en marche arrière, un rapport de transmission du variateur (12) qui s'allonge et deviennent plus long que celui de la marche avant.

2. Dispositif de pilotage selon la revendication 1 caractérisé en ce que la consigne de vitesse $\omega_c$ est une fonction de la position $\theta$ des moyens d'alimentation du moteur (1), qu'on peut calculer à partir des caractéristiques habituelles du moteur, du convertisseur et du variateur de façon à obtenir les performances maximales.

3. Dispositif de pilotage selon la revendication 2 caractérisé en ce que la consigne de vitesse $\omega_c = f_2 (\theta)$ varie suivant une courbe du type de la courbe F de la figure (5) pour la marche arrière, tandis que la vitesse de consigne $\omega_c = f_1 (\theta)$ varie suivant une courbe E de la figure (5) pour la marche avant.

4. Dispositif de pilotage selon l'une des revendications précédentes caractérisé en ce qu'il s'applique à un variateur à courroie ou à chaine (12), dont les poulies sont munies de vérins hydrauliques (16 et 17), ledit dispositif de pilotage ayant à générer deux pressions $P_i$ et $P_j$ s'exerçant respectivement sur les poulies primaire (13) et secondaire (14).

5. Dispositif de pilotage selon la revendication 4 caractérisé en ce qu'il comporte une unité logique (18) associée à deux électro-vannes (20 et 21) de modulation des pressions; l'unité logique (18) recevant l'information position du levier de sélection (19), l'information position des moyens d'alimentation $\theta$ du moteur thermique (1) et l'information de vitesse d'entrée du variateur $\omega_e$ de façon à générer des signaux électriques sur les électro-vannes pour obtenir des pressions $P_i$ et $P_j$ qui varient selon les lois suivantes:
- $P_i = f (\theta, \omega_m, \rho)$
- $P_j = g (\theta, \omega_m, \rho) + PID (\omega_e - \omega_c)$
avec
- $PID (\omega_e - \omega_c) = \alpha (\omega_e - \omega_c) + \beta \int (\omega_e - \omega_c) dt + \gamma d/dt (\omega_e - \omega_c)$.

6. Dispositif de pilotage selon la revendication 4 caractérisé en ce qu'il comporte une vanne (22) qui régule la pression du vérin (17) de la deuxième poulie (14) et une vanne (23) qui régule la pression du vérin (16) de la première poulie (13), la vanne (23) étant soumise à des efforts fonctions de la rotation d'une première came (24) ou d'une seconde came (25) selon que le levier de sélection est en avant ou en arrière.

7. Dispositif de pilotage selon la revendication 4 caractérisé en ce que la vanne (26) qui régule la pression du vérin (16) de la poulie primaire (13), et qui est soumise à des forces antagonistes liées d'une part à la vitesse d'entrée du variateur et d'autre part à la position des moyens d'alimentation du moteur, se trouve soumise à une troisième force en marche arrière, cette force étant obtenue en faisant agir la pression d'alimentation du frein de marche arrière (4) sur un épaulement adéquat.

## Patentansprüche

1. Steuervorrichtung für ein stufenlos regelbares Getriebe, das einer Wärmekraftmaschine (1) und einem Drehmomentwandler (2) zugeordnet ist, dessen Turbinenwelle (9) entweder mit der Leitradwelle für die Vorwärtsfahrt oder mit einem Gehäuse (10) für die Rückwärtsfahrt verbunden ist, wobei die Steuervorrichtung ein Programm für die Eingangsgeschwindigkeit des Getriebes (12) für die Rückwärtsfahrt erzeugt, das sich von dem Programm für die Eingangsgeschwindigkeit des Getriebes für die Vorwärtsfahrt dahingehend unterscheidet, daß während der Gleitzeit des Wandlers (2) bei Rückwärtsfahrt ein Übersetzungsverhältnis des Getriebes (12) erhalten wird, das größer und länger wird als dasjenige für die Vorwärtsfahrt.

2. Steuervorrichtung nach Anspruch 1, dadurch gekennzeichnet, daß das Programm $\omega_c$ eine Funktion der Stellung $\theta$ der Betätigungsanordnung des Motors (1) ist, die aus den herkömmlichen Eigenschaften des Motors, des Wandlers und des Getriebes derart berechnet wird, daß optimale Leistungen erzielt werden.

3. Steuervorrichtung nach Anspruch 2, dadurch gekennzeichnet, daß das

Geschwindigkeitsprogramm $\omega_c$ = $f_2$ ($\theta$) sich gemäß einer Kurve vom Typ der Kurve F in Figur 5 für die Rückwärtsfahrt ändert, während sich das Geschwindigkeitsprogramm $\omega_c$ = $f_1$ ($\theta$) gemäß einer Kurve E in Figur 5 für die Vorwärtsfahrt ändert.

4. Steuervorrichtung nach einem der vorhergehenden Ansprüche, dadurch gekennzeichnet, daß sie einem mit Keilriemen oder Ketten versehenen stufenlosen Getriebe (12) zugeordnet ist, dessen Scheiben mit Hydraulikzylindern (16 und 17) versehen sind, wobei die Steuervorrichtung in der Lage ist zwei Drucke $p_i$ und $p_j$ zu erzeugen, die die erste Antriebsscheibe (13) bzw. die zweite Antriebsscheibe (14) beaufschlagen.

5. Steüervorrichtung nach Ansprüch 4, dadurch gekennzeichnet, daß sie eine logische Einheit (18) aufweist, die zwei die Drücke modulierenden Elektroventilen (20 und 21) zugeordnet ist und daß die logische Einheit (18) eine Information über die Stellung des Wahlhebels (19) erhält sowie eine Information über die Stellüng der Betätigungsanordnung $\theta$ der Wärmekraftmaschine (1) und eine Information über die Eingangsgeschwindigkeit des Getriebes $\omega_e$ um so elektrische Signale für die Elektroventile zu erzeugen für die Drücke $p_i$ und $p_j$, die den folgenden Gesetzen gehorchen:

- $p_i$ = f ($\theta$, $\omega_m$, $\rho$)
- $p_j$ = g ($\theta$, $\omega_m$, $\rho$) + PID ($\omega_e$ - $\omega_c$)
wobei
- PID ($\omega_e$ - $\omega_c$) = $\alpha$ ($\omega_e$ -$\omega_c$) + $\beta \int$ ($\omega_e$ - $\omega_c$) dt + $\partial$d/dt .($\omega_e$ - $\omega_c$).

6. Steuervorrichtung nach Anspruch 4, dadurch gekennzeichnet, daß sie ein Ventil (22) aufweist zur Regulierung des Drucks des Zylinders (17) der zweiten Scheibe (14) und ein Ventil (23) zur Regulierung des Drucks des Zylinders (16) der ersten Scheibe (13), wobei das Ventil (23) von Kräften beaufschlagt wird, die eine Funktion der Rotation eines ersten Nockens (24) oder eines zweiten Nockens (25) ist, je nachdem, ob der Wahlhebel auf Vorwärts oder Rückwärts steht.

7. Steuervorrichtung nach Anspruch 4, dadurch gekennzeichnet, daß das Ventil (26) zur Regelung des Drucks im Zylinder (16) der ersten Scheibe (13) und das von antagonistischen Kräften beaufschlagt wird, die einerseits von der Eingangsgeschwindigkeit des Getriebes und andererseits von der Stellung der Antriebsanordnung des Motors abhängen, von einer dritten Kraft bei Rückwärtsfahrt beaufschlagt wird, wobei diese Kraft erhalten wird, indem der Versorgungsdruck der Rückwärtsbremse (4) auf eine entsprechende Schulter wirkt.

**Claims**

1. Apparatus for pilot control of a continuous transmission associated with a heat engine (1) and a reversing converter (2) whose turbine shaft (9) is either fixed with respect to the shaft of the reactor (6) to produce forward movement or fixed with respect to the casing (10) to produce reverse movement, wherein said pilot control apparatus generates a command in respect of input speed $\omega_c$ of the variator (12) for reverse movement, which is different from the command in respect of input speed of the variator for forward movement; so as to produce, during the slip time of the converter (2) in reverse movement, a transmission ratio for the variator (12) which increases in length and becomes longer than that for forward movement.

2. A pilot control apparatus according to claim 1 characterised in that the command in respect of speed $\omega_c$ is a function of the position $\theta$ of the feed means of the engine (1), which can be calculated from the usual characteristics of the engine, the converter and the variator, so as to obtain the maximum levels of performance.

3. A pilot control apparatus according to claim 2 characterised in that the command in respect of speed $\omega_c$ = $f_2$ ($\theta$) varies in accordance with a curve of the type of the curve F in Figure 5 for reverse movement while the command speed $\omega_c$ = $f_1$ ($\theta$) varies in accordance with a curve E in Figure 5 for forward movement.

4. A pilot control apparatus according to one of the preceding claims characterised in that it is applied to a variator (12) of belt or chain type in which the pulleys are provided with hydraulic jacks (16 and 17), said pilot control apparatus having to generate two pressures $P_i$ and $P_j$ which are respectively applied to the primary and secondary pulleys (13 and 14).

5. A pilot control apparatus according to claim 4 characterised in that it comprises a logic unit (18) associated with two electrically operated valves (20 and 21) for modulating pressures; the logic unit (18) receiving information in respect of the position of the selection lever (19), information in respect of the position of the feed means $\theta$ of the heat engine (1) and information in respect of the input speed of the variator $\omega_e$ so as to generate electrical signals at the electrically operated valves to produce pressures $P_i$ and $P_j$ which vary in accordance with the following laws:

- $P_i$ =f ($\theta$, $\omega_m$, $\rho$)
- $P_j$ = g ($\theta$, $\omega_m$, $\rho$) + PID ($\omega_e$ - $\omega_c$) with
- PID ($\omega_e$ - $\omega_c$) = $\alpha$ ($\omega_e$ - $\omega_c$) + $\beta \int$ ($\omega_e$ - $\omega_c$) dt + $\gamma$ d/dt ($\omega_e$ - $\omega_c$).

6. A pilot apparatus according to claim 4 characterised in that it comprises a control valve (22) which regulates the pressure of the jack (17) of the second pulley (14) and a valve (23) which regulates the pressure of the jack (16) of the first pulley (13), the valve (23) being subjected to forces dependent on the rotation of a first cam (24) or a second cam (25) according to whether the selection lever is in forward or reverse.

7. A pilot control apparatus according to claim 4 characterised in that the valve (26) which regulates the pressure of the jack (16) of the primary pulley (13) and which is subjected to counteracting forces linked on the one hand to the input speed of the variator and on the other hand to the position of the feed means of the engine, is subjected to a third force in reverse, said force being produced by causing the feed pressure of the reverse-movement brake (8) to act on a suitable shoulder.

## FIG.1

FIG.2

FIG. 3

## FIG.4

# FIG.5

FIG :6

FIG :7

FIG :8